# FASCICULE DE BREVET EUROPEEN

(11) **EP 3 325 278 B1**
(45) Date de publication et mention de la délivrance du brevet: **28.08.2019**
(21) Numéro de dépôt: 16751318.3
(22) Date de dépôt: 16.07.2016
(51) Int. Cl.: B42D 25/24, B42D 25/324, B42D 25/305, B42D 25/328, B42D 25/333, B42D 25/346, B42D 25/373

(54) **INSERT POUR PAGE DE DONNÉES DE LIVRET PASSEPORT**
EINSATZ FÜR REISEPASSDATENBLATT
INSERT FOR PASSPORT BOOKLET DATA SHEET

(30) Priorité: 17.07.2015 FR 1501520
(43) Date de publication de la demande: 30.05.2018
(73) Titulaire: Smart Packaging Solutions (SPS), 13790 Rousset Cedex (FR)
(72) Inventeur: BRUNET, Olivier, 13790 Rousset (FR); RIPERT, Anne, 13790 Rousset (FR); MICHAU, Pascal-Daniel, 59500 Douai (FR)
(74) Mandataire: Nicolle, Olivier
(86) Numéro de dépôt international: PCT/FR2016/000118
(87) Numéro de publication internationale: WO 2017/013311

(56) Documents cités:
- EP-A2- 1 690 698
- WO-A1-2015/018615
- FR-A1- 2 872 737

## Description

L'invention concerne une page de données pour un livret de passeport électronique, qu'il s'agisse d'un passeport classique ou d'un passeport à lecture sans contact par voie radiofréquence. Elle concerne également une page de données pour passeport, et un passeport en forme de livret, cousu ou agrafé, intégrant une telle page de données. Dans la suite, l'invention sera décrite principalement en rapport avec un passeport, bien que l'invention puisse être utilisée avec d'autres documents de sécurité utilisant une page de données.

### Etat de la technique

On appelle « page de données » dans le cadre de la présente demande, ou « Data Page » en terminologie anglo-saxonne, un encart relativement rigide, généralement en polycarbonate, formant la page d'un livret passeport où sont inscrites les données biométriques du titulaire du passeport. Il est généralement entendu que les données inscrites sur une telle page de données devraient être très difficiles à modifier ou falsifier, sans équipement très spécialisé.

Cette page de données a le même format que les autres pages du livret passeport, à ceci près qu'elle comporte une charnière au niveau de la zone de pliage et d'assemblage des pages du passeport, afin que la page de données puisse être assemblée avec les autres pages du passeport, généralement par couture ou par agrafage des différentes pages du livret dans la zone de pliage. Afin de renforcer la résistance de la page de données à l'arrachage, la zone de charnière se prolonge par un prolongement de matière qui s'étend au-delà de la zone de pliage, généralement en matière plastique.

Ainsi, on connaît déjà par le document EP 1 245 407 B2 (Gemalto) une feuille de données flexible pour passeport qui combine une couche en matière plastique (polycarbonate) apte à recevoir des inscriptions de données par laser, relativement peu résistante à un grand nombre de flexions, avec une couche en HDPE (« High Density Polyethylene ») beaucoup plus résistante aux flexions, qui s'étend jusque dans la charnière de la feuille de données. Ces couches sont laminées ensemble à l'aide d'une couche de stratification, et l'ensemble présente une épaisseur assez importante, d'environ 600 micromètres. Malgré cette épaisseur importante, cette feuille de données présente une assez faible résistance à l'arrachage par rapport à un livret passeport, car toutes les couches sont en matière plastique assez facile à arracher au niveau des coutures du livret, malgré le prolongement en matière plastique s'étendant au-delà de la charnière.

On connait par ailleurs par le document WO 2015/018615 A1, le préambule de la revendication 1, ou une feuille d'insert pour livret passeport, comportant un prolongement au-delà de la zone de charnière, mais cette feuille ne comporte pas de couche métallique susceptible à la fois de renforcer la résistance mécanique de l'insert et de constituer une antenne.

### Buts de l'invention

Un but général de l'invention est par conséquent de proposer une nouvelle conception d'un insert pour page de données de livret passeport ou autre document de sécurité sous forme de livret, qui soit dépourvu des inconvénients précités.

Un but particulier de l'invention est de proposer une page de données de livret passeport, comportant un insert présentant une nouvelle structure de charnière, à la fois plus économique à réaliser que les charnières en polycarbonate connues, et surtout plus performante en termes de résistance à l'arrachement, tout en étant compatible avec des passeports électroniques incorporant une couche métallique formant une antenne.

Un autre but de l'invention est de proposer une page de données pour livret passeport offrant davantage de possibilités pour intégrer des motifs ou marquages de sécurité susceptibles de résister à la falsification des passeports.

### Résumé de l'invention

A cet effet, le principe de l'invention prévoit de proposer une structure d'insert pour page de données de livret passeport, comportant une charnière renforcée à l'aide d'une couche métallique, et permettant de fabriquer des pages de données ayant une épaisseur moindre que les pages de données connues.

Un premier type d'insert pour page de données de livret passeport comporte une antenne métallique obtenue notamment par enlèvement de matière à partir d'une feuille métallique pleine, et permettant la communication avec un lecteur distant. L'invention prévoit de prolonger la couche métallique servant à la réalisation de l'antenne, au-delà de la zone de pliage et de couture, pour faire office de charnière de l'insert et de la page de données qui incorpore l'insert. Cette charnière est alors particulièrement résistante à l'arrachage et à la déchirure, tout en étant très économique à réaliser, et tout en assurant la réalisation à partir d'une couche métallique unique, à la fois de l'antenne et de la charnière.

L'invention est également applicable à un deuxième type d'insert pour page de données, à savoir les pages de données non électroniques, dépourvues d'antenne. Dans ce cas, l'insert est formé par une structure multicouches présentant au moins une couche de polyester, et au moins une couche métallique, mais sans antenne, cette couche métallique étant là encore prolongée au-delà de la zone de pliage de la charnière, afin de renforcer la résistance à l'arrachage de la page de données.

Afin d'accroître encore la souplesse de la charnière de la page de données, l'invention prévoit en outre que l'insert de la page de données comporte, le long de sa zone de charnière, des perforations, par exemple en forme de nid d'abeille, permettant d'assouplir localement l'insert.

L'invention a par conséquent pour objet un insert pour page de données de livret passeport, formé par un complexe multicouches comportant au moins une première couche et une deuxième couche comportant une charnière présentant une zone de pliage où l'insert est destiné à être cousu ou agrafé dans un livret passeport, ladite deuxième couche comportant en combinaison au moins une couche en matière plastique et au moins une couche de renfort métallique formant ensemble un prolongement qui s'étend d'une certaine distance au-delà de ladite zone de pliage de la charnière, de façon à renforcer la résistance de ladite page de données à l'arrachage et à la déchirure par rapport au livret passeport, ladite première couche (2) ne comportant ni charnière ni prolongement, caractérisé en ce que ladite couche en matière plastique et ladite couche de renfort métallique s'étendent sur toute la surface de l'insert.

Ainsi, la couche en matière plastique confère à l'insert une forte résistance à la déchirure, ce qui est connu en soi. Mais l'addition d'une couche métallique confère à cet insert également une forte résistance à l'arrachage de l'insert et de la page de données qui l'utilise, par rapport à la couture d'un livret passeport.

De préférence, cet insert est un insert électronique pourvu d'une antenne, et l'antenne est obtenue directement par enlèvement de matière à partir de ladite couche de renfort métallique. Autrement dit, c'est le prolongement de la couche métallique utilisée pour fabriquer l'antenne, qui s'étend au-delà de la zone de pliage de la charnière et qui est par conséquent destiné à être cousu dans le livret passeport avec les autres pages de celui-ci.

Lorsque cet insert sera utilisé pour fabriquer une page de données pour livret passeport, la couture des pages se fera à la fois à travers la couche métallique et la couche en matière plastique, conférant à la page de données une résistance supérieure d'un ordre de grandeur à la résistance des pages de données connues.

Selon un mode de réalisation de l'invention, la distance dont la couche métallique de l'insert s'étend au-delà de la zone de pliage de la charnière, qui correspond à la largeur du prolongement métallique, est comprise entre 2 et 15 mm.

La couche métallique aura de préférence une épaisseur comprise entre 10 et 30 micromètres, et la couche de matière plastique aura une épaisseur comprise entre 20 et 150 micromètres. De ce fait, l'épaisseur totale de l'insert sera comprise entre 30 et 180 micromètres. Il en résulte qu'une page de données utilisant un insert selon l'invention, pourra être plus fine et plus facile à intégrer dans un passeport que celles connues, tout en étant bien plus résistante.

Selon un mode de réalisation de l'insert, ladite couche en matière plastique est en polyester, très résistante à la déchirure, et ladite couche métallique est en aluminium, très résistante à l'arrachage et pourtant très flexible, ce qui permet au livret passeport utilisant l'insert de rester fermé de façon naturelle.

Afin de solidariser les couches de l'insert entre elles, la couche d'aluminium est collée sur la couche de polyester à l'aide d'un adhésif ayant 2 à 3 micromètres d'épaisseur, par exemple en polyuréthane ou en époxy.

Au-delà des avantages en matière de résistance et de faible épaisseur qui viennent d'être mentionnés, l'insert selon l'invention peut également aisément être pourvu d'éléments de sécurité visibles. A cet effet, on réalise sur ledit prolongement de la couche métallique au-del de la charnière, un ou plusieurs éléments de sécurité visibles directement par réflexion de la lumière, ou en filigrane, aptes à augmenter la résistance de la page de données à la falsification.

Plusieurs éléments de sécurité sont envisageables, tels que notamment des gravures réalisées dans la couche métallique, des motifs en filigrane, des hologrammes, des motifs gravés au laser, ou des motifs obtenus par découpe, par marquage à chaud, par gaufrage ou par embossage réalisés sur ou dans la couche métallique, ou par tout autre moyen de marquage de la couche métallique

L'invention a également pour objet une page de données pour livret passeport, comportant un insert selon l'invention, et un livret passeport comportant une telle page de données.

D'autres caractéristiques et avantages de l'invention apparaîtront à la lecture de la description détaillée et des dessins annexés dans lesquels :
- la figure 1 illustre une vue en coupe transversale de l'insert selon l'invention ;
- la figure 2 représente une vue en perspective éclatée de l'insert de la figure 1;

### Description détaillée

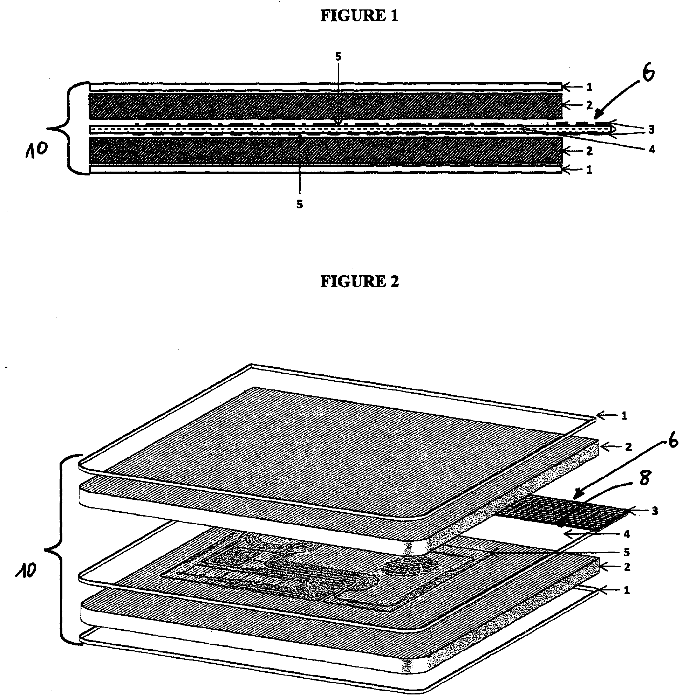

En figure 1 on a représenté en coupe transversale un insert 10 pour page de données électronique destinée à être cousue dans un livret passeport ou autre type de livret (non représenté).

L'insert 10 comporte essentiellement une âme formée par une couche centrale 4 en matière plastique résistante à la déchirure, tel que par exemple du PET, et une couche métallique 3 collée sur l'une ou les deux faces de la couche 4 en matière plastique (la très fine couche de colle n'est pas représentée).

Alternativement, on pourrait aussi avoir une couche métallique 3 unique, entourée de part et d'autre par une couche 4 en matière plastique.

Dans un mode de réalisation avantageux, la couche métallique 3 comporte des discontinuités, correspondant à des enlèvements de matière, notamment par gravure chimique ou laser, pour former les spires d'une antenne 5. Mais l'antenne 5 peut être réalisée par tout autre méthode connue, sans limiter la portée de la présente invention.

Sur un, ou de préférence sur les deux côtés de l'âme constituée par les couches 3,4 de PET et de métal, on lamine une ou deux couches opaques 2 susceptibles de cacher les spires de l'antenne 5. La face externe de ces couches opaques peut comporter des informations imprimées ou gravées, relatives au porteur du passeport.

Enfin, au-dessus des couches opaques 2 on peut laminer une couche de protection optionnelle 1 en matière plastique transparente, permettant de voir par transparence les informations éventuellement imprimées ou gravées sur les couches opaques 2.

Les couches 1,2 sont au format des pages d'un livret passeport. Par contre, il est essentiel de noter que selon l'invention, les couches 3,4 de matière plastique et de métal s'étendent d'une certaine distance au-delà des couches 1,2, pour former un prolongement 6 de l'insert. Ce prolongement 6 s'étend au-delà de la zone de pliage 8 de la charnière, où l'insert sera cousu ou agrafé dans un livret passeport.

Afin d'obtenir une résistance suffisante de l'insert 10 par rapport à l'arrachage, cette distance, qui correspond à la largeur du prolongement 6, est comprise entre 2 et 15 mm.

Comme visible en figure 2, il est très avantageux que la couche métallique 3 qui sert à former le prolongement 6, soit la même couche métallique que celle qui est utilisée pour fabriquer l'antenne 5 (dans le cas d'une page de données électronique).

En d'autres termes, la ou les couches métalliques 3 qui sont utilisées pour fabriquer l'antenne, notamment par enlèvement de matière, sont prolongées au-delà de la zone de pliage 8 de la charnière où la page de données sera cousue dans le livret passeport. Cela permet à la fois une fabrication très simple de l'insert, et une résistance accrue permettant d'utiliser des couches de matière plus fines que dans les inserts connus.

Les couches supplémentaires 1,2 de l'insert sont connues en soi et ne seront pas décrites davantage.

Le fait que le prolongement 6 de la charnière de l'insert comporte une ou plusieurs couches métalliques 3 apparentes permet d'y réaliser des motifs de sécurité visibles . On utilisera des motifs dé-métallisés, éventuellement en registre recto verso, ou des motifs embossés dans le métal, des microstructures réalisées par gaufrage, des hologrammes, des perforations au laser, des marquages de couleur, ou tout autre marquage de sécurité réalisable sur une couche métallique.

L'insert tel que représenté en figure 2 peut aisément être intégré à une page de données, par laminage de l'insert avec une ou plusieurs couches de matière supplémentaires, comme connu en soi. Et cette page de données sera alors aisément cousue ou agrafée dans un livret passeport, comme également connu en soi.

### Avantages de l'invention

En définitive, l'invention propose une conception nouvelle d'insert pour page de données de livret passeport, en rupture technologique par rapport aux inserts connus. Cet insert n'est qu'un composant de la page de données en polycarbonate, et il peut être vendu sous cette forme, ou sous la forme complète après assemblage dans une page de données.

L'insert obtenu se distingue par sa simplicité d'assemblage, puisqu'aucune matière additionnelle n'est rapportée pour réaliser la charnière et le prolongement 6 au-delà de la zone de pliage et de couture. En effet, la charnière et le prolongement 6 utilisent la couche métallique de l'insert, dans laquelle est aussi réalisée l'antenne de l'insert dans le cas d'un insert électronique.

L'insert selon l'invention se distingue également par sa résistance mécanique beaucoup plus élevée à la fois à la déchirure et à l'arrachage, du fait de la liaison intime entre une couche métallique et les couches en matière plastique, notamment en polyester, qui l'entourent.

Le procédé de fabrication est également très simple et économique. La phase de laminage pour composer une page de données complète peut se faire en une ou plusieurs étapes de laminage, soit en passant par une première étape afin de constituer d'abord un insert, soit en laminant ensemble toutes les couches de la page de données en une seule étape de laminage constituant ainsi la page de données finale.

Enfin, la présence d'un prolongement de la charnière en métal permet à la fois de réaliser la couture à travers le métal, ce qui est un gage de résistance mécanique, et de disposer d'une zone où de nombreux motifs de sécurité visibles peuvent être réalisés : gravures, découpes, hologrammes, filigranes, etc.

Lorsque le prolongement de la couche métallique s'étend sur l'essentiel de la surface de la page de données, la couche métallique peut alors former un blindage évitant la lecture des données de la page de données, lorsque le livret passeport est fermé.

## Revendications

1. Insert (10) pour page de données de livret passeport, formé par un complexe multicouches (2,3,4) comportant au moins une première couche (2) et une deuxième couche (3,4) comportant une charnière présentant une zone (8) de pliage où l'insert (10) est destiné à être cousu ou agrafé dans un livret passeport, ladite deuxième couche (3,4) comportant en combinaison au moins une couche en matière plastique (4) et au moins une couche (3) de renfort métallique formant ensemble un prolongement (6) qui s'étend d'une certaine distance au-delà de ladite zone (8) de pliage de la charnière, de façon à renforcer la résistance de ladite page de données à l'arrachage et à la déchirure par rapport au livret passeport, ladite première couche (2) ne comportant ni charnière ni prolongement, **caractérisé en ce que** ladite couche en matière plastique (4) et ladite couche (3) de renfort métallique s'étendent sur toute la surface de l'insert.

2. Insert selon la revendication 1, **caractérisé en ce qu'**il comporte une antenne (5) permettant à l'insert de communiquer avec un lecteur distant.

3. Insert selon l'une quelconque des revendications précédentes, **caractérisé en ce que** ladite distance dont ledit prolongement (6) s'étend au-delà de ladite zone de pliage (8) est comprise entre 2 et 15 mm.

4. Insert selon l'une quelconque des revendications précédentes, **caractérisé en ce que** ladite couche métallique (3) a une épaisseur comprise entre 10 et 30 micromètres, et **en ce que** ladite couche de matière plastique (4) a une épaisseur comprise entre 20 et 150 micromètres.

5. Insert selon l'une quelconque des revendications précédentes, **caractérisé en ce que** ladite couche en matière plastique (4) est en polyester, et **en ce que** ladite couche métallique (3) est en aluminium.

## Patentansprüche

1. Einsatz (10) für ein Reisepassheft-Datenblatt, der von einem Mehrlagenkomplex (2, 3, 4) gebildet wird, der mindestens eine erste Lage (2) und eine zweite Lage (3, 4) aufweist, die ein Scharnier aufweist, das eine Faltzone (8) hat, wo der Einsatz (10) in einen Reisepassheft genäht oder geklammert werden soll, wobei die zweite Lage (3, 4) in Kombination mindestens eine Kunststofflage (4) und mindestens eine metallische Verstärkungslage (3) aufweist, die zusammen eine Verlängerung (6) bilden, die sich über einen bestimmten Abstand jenseits der Faltzone (8) des Scharniers erstreckt, um den Widerstand des Datenblatts gegen das Herausreißen und Zerreißen bezüglich des Reisepassheftes zu verstärken, wobei die erste Lage (2) weder ein Scharnier noch eine Verlängerung aufweist, **dadurch gekennzeichnet, dass** die Kunststofflage (4) und die metallische Verstärkungslage (3) sich über die ganze Fläche des Einsatzes erstrecken.

2. Einsatz nach Anspruch 1, **dadurch gekennzeichnet, dass** er eine Antenne (5) aufweist, die es dem Einsatz ermöglicht, mit einem fernen Lesegerät zu kommunizieren.

3. Einsatz nach einem der vorhergehenden Ansprüche, **dadurch gekennzeichnet, dass** der Abstand, über den die Verlängerung (6) sich jenseits der Faltzone (8) erstreckt, zwischen 2 und 15 mm beträgt.

4. Einsatz nach einem der vorhergehenden Ansprüche, **dadurch gekennzeichnet, dass** die Metalllage (3) eine Dicke zwischen 10 und 30 Mikrometer hat, und dass die Kunststofflage (4) eine Dicke zwischen 20 und 150 Mikrometer hat.

5. Einsatz nach einem der vorhergehenden Ansprüche, **dadurch gekennzeichnet, dass** die Kunststofflage (4) aus Polyester ist, und dass die Metalllage (3) aus Aluminium ist.

## Claims

1. Insert (10) for a passport booklet data page, formed by a multilayer complex (2,3,4) including at least a first layer (2) and a second layer (3,4) including a hinge having a folding zone (8) where the insert (10) is intended to be sewn or stapled into a passport booklet, said second layer (3,4) including a combination of at least one layer (4) made of plastic and at least one metal reinforcing layer (3) together forming an extension (6) that extends a certain distance beyond said folding zone (8) of the hinge so as to improve the pull-out and tear resistance of said data page in relation to the passport booklet, said first layer (2) not including a hinge or an extension, **characterized in that** said layer (4) made of plastic and said metal reinforcing layer (3) extend over the entire surface area of the insert.

2. Insert according to Claim 1, **characterized in that** it includes an antenna (5) enabling the insert to communicate with a remote reader.

3. Insert according to either one of the preceding claims, **characterized in that** said distance by which said extension (6) extends beyond said folding zone (8) is between 2 and 15 mm.

4. Insert according to any one of the preceding claims, **characterized in that** said metal layer (3) has a thickness of between 10 and 30 micrometers, and **in that** said layer (4) of plastic has a thickness of between 20 and 150 micrometers.

5. Insert according to any one of the preceding claims, **characterized in that** said layer (4) made of plastic is made of polyester, and **in that** said metal layer (3) is made of aluminum.
